# EUROPEAN PATENT APPLICATION

(11) **EP 2 023 158 A2**
(43) Date of publication of application: **11.02.2009**
(21) Application number: 08161111.3
(22) Date of filing: 24.07.2008
(51) Int. Cl.: G01S 13/93, G01S 7/41

(54) **Automotive forward looking sensor with identification of traversable stationary obstacles in the driving path**

(30) Priority: 25.07.2007 JP 2007193535
(71) Applicant: Fujitsu Ten Limited, Kobe-shi, Hyogo 652-8510 (JP)
(72) Inventor: Shibata, Shinichi c/o Fujitsu Ten Limited, Hyogo 652-8510 (JP); Shinagawa, Tokio c/o Fujitsu Ten Limited, Hyogo 652-8510 (JP); Matsui, Isao c/o Fujitsu Ten Limited, Hyogo 652-8510 (JP)
(74) Representative: Skone James, Robert Edmund

(57) **Abstract**

A forward object sensor (50) includes a plurality of stationary on-road object recognizing units (13b, 13c, 13d, 13e, 13f). The stationary on-road object recognizing units (13b, 13c, 13d, 13e, 13f) recognize a forward object as a stationary on-road object when a preceding vehicle has passed over the forward object, when a preceding vehicle is located ahead of the forward object, when the vehicle (100) is travelling at a speed higher than a predetermined speed and the forward object is located between two other objects, when it is not until the vehicle (100) comes close to the forward object that the forward object is detected, and when the strength of a reflected wave from the forward object monotonically increases until the distance between the forward object and the vehicle (100) reaches a predetermined value and monotonically decreases when the distance falls below the predetermined value, respectively.

## Description

The present invention relates to a forward object sensor that sends out a radar wave and detects an object based on a reflected wave received in response to the radar wave.

Some vehicles are equipped with a forward object sensor (an on-vehicle radar such as a millimeter-wave radar) for sensing an object ahead of them. A known forward object sensor sends out a radar wave ahead of a vehicle and receives a reflected wave in response to the radar wave, thereby detecting an object that may present an obstacle to the travel of the vehicle. Based on a detection result obtained by the forward object sensor, the driving mechanism of the vehicle is controlled to, for example, reduce the speed or stop the vehicle. Thus, the vehicle can avoid a collision with an obstacle ahead of it.

If a collision with an obstacle is likely to result in a traffic accident, the forward object sensor is obliged to detect the obstacle to avoid the accident. However, the radar wave used by the forward object sensor is characteristically sensitive to even a stationary object on the road that the vehicle is unlikely to collide with and that poses no risk of accident. As a result, the forward object sensor may erroneously detect such a stationary object as an obstacle. This calls for technologies that are capable of recognizing any forward object, apart from such a stationary on-road object, that a vehicle is unlikely to collide with and that poses no risk of accident.

For example, Japanese Patent Application Laid-open No. H11-45395 discloses a conventional technology in which an object detection unit installed in a vehicle compares a value based on temporal variations in the position of an object with a threshold that decreases with lapse of time since the appearance of the object with respect to each label. Upon determining that the value based on temporal variations is below the threshold, the object detection unit determines that the object is a stationary on-road object. This conventional technology prevents, for example, reflectors embedded in the road such as a cat's eye from being erroneously detected as an obstacle ahead of the vehicle.

Japanese Patent Application Laid-open No. 2006-98220 discloses another conventional technology in which a preceding vehicle detector installed in a vehicle emits, for example, laser beams ahead of the vehicle such that the upper and lower irradiation waves thereof partially overlap. Based on the strength of reflected waves from an object in response to the respective irradiation waves, the preceding vehicle detector determines the type of the object.

Japanese Patent Application Laid-open No. 2002-189075 discloses still another conventional technology in which a stationary above-road object detector installed in a vehicle includes a camera and a radar. When an object caught by the camera is identified as the same object detected by the radar, and also the object is determined to be present higher than the horizon from an image caught by the camera, the stationary above-road object detector determines that the object is a stationary object above the road (a stationary above-road object) such as a bridge. Upon determining that the distance from an object caught by the camera or the radar decreases and that the reception level from the object detected by the radar lowers, the stationary above-road object detector determines that the object is a stationary above-road object. With the stationary above-road object detector, a stationary above-road object can be prevented from being erroneously detected as an obstacle ahead of the vehicle that a vehicle may collide with and thus that poses a risk of accident.

With the conventional technology disclosed in Japanese Patent Application Laid-open No. H11-45395, however, a radar wave is scanned vertically with respect to the road surface, and a stationary on-road object, especially a steel plate such as a manhole cover, may not be accurately identified. That is, a stationary on-road object that returns a reflected wave at the same level as that from an obstacle ahead of a vehicle may not be accurately identified by the determination based only on the threshold.

The conventional technology disclosed in Japanese Patent Application Laid-open No. 2006-98220 requires the use of the upper and lower irradiation waves of a laser beam. Therefore, the radar needs to be configured to emit radar waves in two directions, resulting in higher cost. Besides, as with the former conventional technology, a stationary on-road object that returns a reflected wave at the same level as that from an obstacle ahead of a vehicle may not be accurately identified.

With the conventional technology disclosed in Japanese Patent Application Laid-open No. 2002-189075, a stationary on-road object can be distinguished from an obstacle ahead of a vehicle. However, by the camera that captures an image ahead of a vehicle, it is difficult to capture the image of a stationary on-road object such as a manhole cover that lies essentially on the same plane as the road surface. Namely, the camera is not applicable to such a stationary on-road object.

Even with a combination of the above conventional technologies, a stationary on-road object such as a manhole cover that lies essentially on the same plane as the road surface is difficult to be recognized. In addition, a stationary on-road object that returns a reflected wave at the same level as that from an obstacle ahead of a vehicle may not be reliably distinguished from the obstacle.

### SUMMARY OF THE INVENTION

It is an object of the present invention to at least partially solve the problems in the conventional technology.

According to an aspect of the present invention, there is provided a forward object sensor that emits a radar wave ahead of a vehicle and detects an object ahead of the vehicle, including a forward object that is located ahead of the vehicle and a preceding vehicle that is traveling ahead of the vehicle, based on a reflected wave received in response to the radar wave. The forward object sensor includes: a forward object detecting unit that detects a forward object; and a stationary on-road object recognizing unit that, upon determination that a preceding vehicle detected by the forward object detecting unit has passed over the forward object, recognizes the forward object as a stationary on-road object.

According to another aspect of the present invention, there is provided a forward object sensor that emits a radar wave ahead of a vehicle and detects an object ahead of the vehicle, including a forward object that is located ahead of the vehicle and a preceding vehicle that is traveling ahead of the vehicle, based on a reflected wave received in response to the radar wave. The forward object sensor includes: a forward object detecting unit that detects a forward object; and a stationary on-road object recognizing unit that, upon determination that a preceding vehicle detected by the forward object detecting unit is located ahead of the forward object, recognizes the forward object as a stationary on-road object.

According to still another aspect of the present invention, there is provided a forward object sensor that emits a radar wave ahead of a vehicle and detects an object ahead of the vehicle, including a forward object that is located ahead of the vehicle and a preceding vehicle that is traveling ahead of the vehicle, based on a reflected wave received in response to the radar wave. The forward object sensor includes: a forward object detecting unit that detects a forward object; and a stationary on-road object recognizing unit that, upon determination that the vehicle is travelling at a speed higher than a predetermined speed and the forward object is located between two other forward objects sequentially detected by the forward object detecting unit, recognizes the forward object as a stationary on-road object.

According to still another aspect of the present invention, there is provided a forward object sensor that emits a radar wave ahead of a vehicle and detects an object ahead of the vehicle, including a forward object that is located ahead of the vehicle and a preceding vehicle that is traveling ahead of the vehicle, based on a reflected wave received in response to the radar wave. The forward object sensor includes: a forward object detecting unit that detects a forward object; and a stationary on-road object recognizing unit that, upon determination that it is not until the vehicle is at a close distance less than a predetermined value from the forward object that the forward object detecting unit detects the forward object, recognizes the forward object as a stationary on-road object.

According to still another aspect of the present invention, there is provided a forward object sensor that emits a radar wave ahead of a vehicle and detects an object ahead of the vehicle, including a forward object that is located ahead of the vehicle and a preceding vehicle that is traveling ahead of the vehicle, based on a reflected wave received in response to the radar wave. The forward object sensor includes: a forward object detecting unit that detects a forward object; a first stationary on-road object recognizing unit that, upon determination that a preceding vehicle detected by the forward object detecting unit has passed over the forward object, recognizes the forward object as a stationary on-road object; a second stationary on-road object recognizing unit that, upon determination that the preceding vehicle is located ahead of the forward object, recognizes the forward object as a stationary on-road object; a third stationary on-road object recognizing unit that, upon determination that the vehicle is travelling at a speed higher than a predetermined speed and the forward object is located between two other forward objects sequentially detected by the forward object detecting unit, recognizes the forward object as a stationary on-road object; a fourth stationary on-road object recognizing unit that, upon determination that it is not until the vehicle is at a close distance less than a predetermined value from the forward object that the forward object detecting unit detects the forward object, recognizes the forward object as a stationary on-road object; and a fifth stationary on-road object recognizing unit that, upon determination that a reflected wave from the forward object has a characteristic that strength of the reflected wave monotonically increases until a distance between the forward object and the vehicle reaches a predetermined value and monotonically decreases when the distance falls below the predetermined value, recognizes the forward object as a stationary on-road object.

The above and other objects, features, advantages and technical and industrial significance of this invention will be better understood by reading the following detailed description of presently preferred embodiments of the invention, when considered in connection with the accompanying drawings.
Fig. 1 is a block diagram of a forward object sensor according to an embodiment of the present invention;
Fig. 2 is a block diagram of a signal processing circuit shown in Fig. 1;
Fig. 3 is a flowchart of a stationary on-road object recognition process;
Figs. 4 and 5 are schematic diagrams illustrating the state where a vehicle determines that a preceding vehicle has passed over an object ahead of the vehicle;
Fig. 6A is a schematic diagram illustrating the state where a preceding vehicle is shielded and is not detected;
Fig. 6B is a schematic diagram illustrating the state where a preceding vehicle is detected without the interference of shielding;
Fig. 7 is another schematic diagram illustrating the state where a preceding vehicle is detected without the interference of shielding;
Fig. 8 is a schematic diagram illustrating the state where an object ahead of a vehicle is located between two of other objects that have been sequentially detected;
Fig. 9 is a schematic diagram illustrating the state where it is not until a vehicle is close to an object ahead thereof that the object is detected;
Fig. 10 is a schematic diagram illustrating the state where a reflected wave from an object ahead of a vehicle monotonically increases until the distance between the object and the vehicle reaches a predetermined value, while the reflected wave monotonically decreases when the distance falls below the predetermined value; and
Fig. 11 is a graph of characteristic curves of the reflected wave from the object that monotonically increases until the distance between the object and the vehicle reaches a predetermined value, and monotonically decreases when the distance falls below the predetermined value.

Exemplary embodiments of the present invention are explained in detail below with reference to the accompanying drawings. In the following, while the radar wave used by a forward object sensor is described as a millimeter wave with a frequency of about 60 to 70 GHz by way of example and without limitation, the forward object sensor can use, for example, radio waves or sound waves of other frequencies.

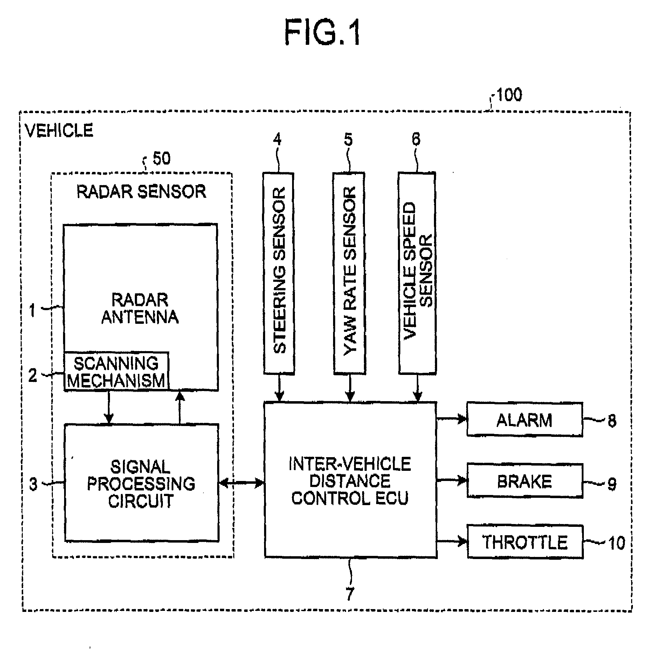

Described below is the configuration of a forward object sensor according to an embodiment of the present invention. Fig. 1 is a block diagram of the forward object sensor according to the embodiment. As shown in Fig. 1, a vehicle 100 is provided with a radar sensor 50 as the forward object sensor. The radar sensor 50 is a millimeter wave radar sensor, and includes a radar antenna 1, a scanning mechanism 2, and a signal processing circuit 3. An inter-vehicle distance control electrical control unit (ECU) 7 receives a signal from a steering sensor 4, a yaw rate sensor 5, and a vehicle speed sensor 6 to control an alarm 8, a brake 9, a throttle 10, and the like. The inter-vehicle distance control ECU 7 also sends a signal to the signal processing circuit 3 of the radar sensor 50.

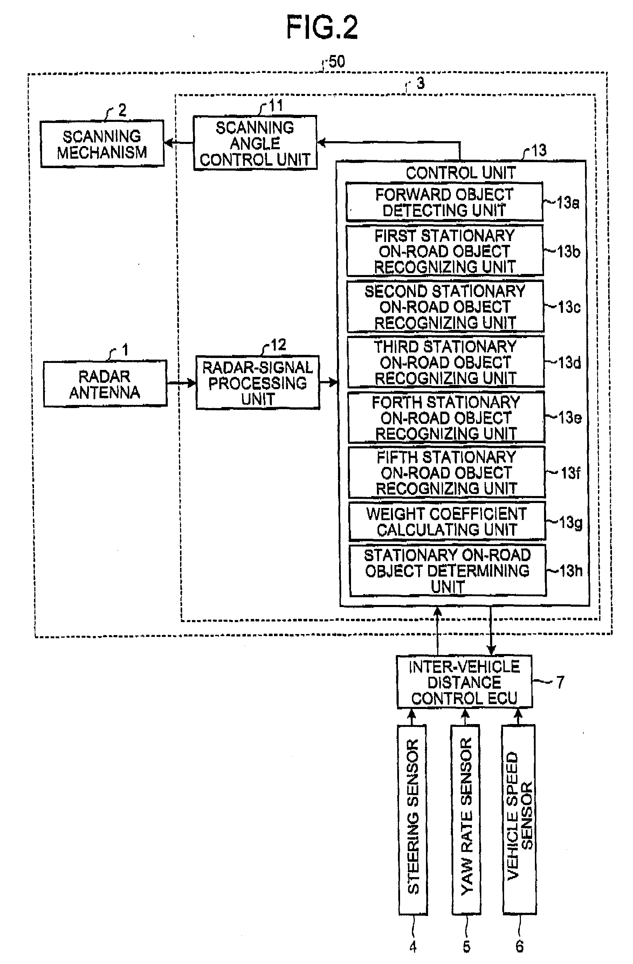

The configuration of the signal processing circuit 3 is described next. Fig. 2 is a block diagram of the signal processing circuit 3. The signal processing circuit 3 includes a scanning angle control unit 11, a radar-signal processing unit 12, and a control unit 13. The radar-signal processing unit 12 performs a fast Fourier transform (FFT) on a reflected signal received from the radar antenna 1 to obtain the power spectrum thereof. The radar-signal processing unit 12 then calculates the distance to a target object and the relative speed, and sends data on them to the control unit 13.

Based on the data, i.e., the distance to the target object and the relative speed, received from the radar-signal processing unit 12, and vehicle information received from the inter-vehicle distance control ECU 7, which has been obtained from the steering sensor 4, the yaw rate sensor 5 and the vehicle speed sensor 6, the control unit 13 instructs the scanning angle control unit 11 on a scanning angle.

The control unit 13 includes a forward object detecting unit 13a, a first stationary on-road object recognizing unit 13b, a second stationary on-road object recognizing unit 13c, a third stationary on-road object recognizing unit 13d, a forth stationary on-road object recognizing unit 13e, a fifth stationary on-road object recognizing unit 13f, a weight coefficient calculating unit 13g, and a stationary on-road object determining unit 13h.

Upon detecting a target object, the forward object detecting unit 13a sends a detection signal to the inter-vehicle distance control ECU 7. The "target object" indicates an object present ahead of the vehicle 100, and is hereinafter referred to as "forward object". When detecting a moving object as a forward object, the forward object detecting unit 13a recognizes it as a preceding vehicle that is traveling ahead of the vehicle 100. On the other hand, when detecting a stationary object, the forward object detecting unit 13a recognizes it as an obstacle such as a wall, a stone, a guardrail, a steel pole or a telephone pole, a stationary on-road object such as a manhole cover or a cat's-eye, or a stationary above-road object such as a bridge or a road sign. Based on the detection signal, the scanning angle control unit 11 adjusts, for example, the scanning angle of a fixed radar upon traveling through a curve, or adjusts the scanning angle of a scanning radar. On receipt of a control signal from the scanning angle control unit 11, the scanning mechanism 2 sequentially emits beams at a predetermined angle for scanning.

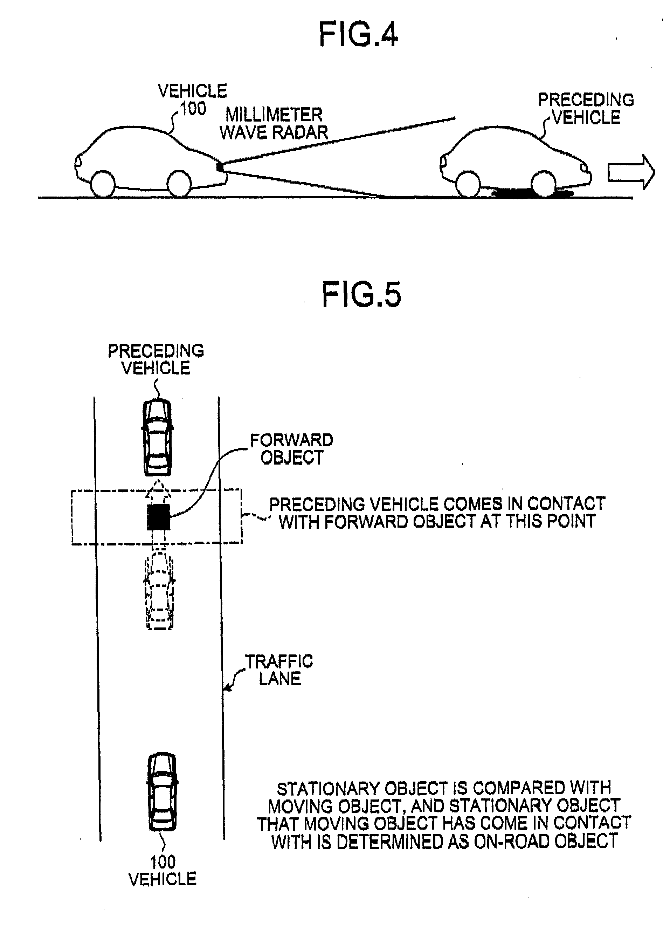

When it is determined that a preceding vehicle detected by the forward object detecting unit 13a has passed over a forward object also detected by the forward object detecting unit 13a, the first stationary on-road object recognizing unit 13b recognizes the forward object as a stationary on-road object. Specifically, it is assumed that, as shown in Fig. 4, the radar sensor 50 of the vehicle 100 has detected a preceding vehicle and a forward object ahead of the preceding vehicle. When, as shown in Fig. 5, the preceding vehicle has passed over the forward object, the first stationary on-road object recognizing unit 13b recognizes the forward object as a stationary on-road object.

When it is determined that a preceding vehicle detected by the forward object detecting unit 13a is located ahead of a forward object also detected by the forward object detecting unit 13a, the second stationary on-road object recognizing unit 13c recognizes the forward object as a stationary on-road object.

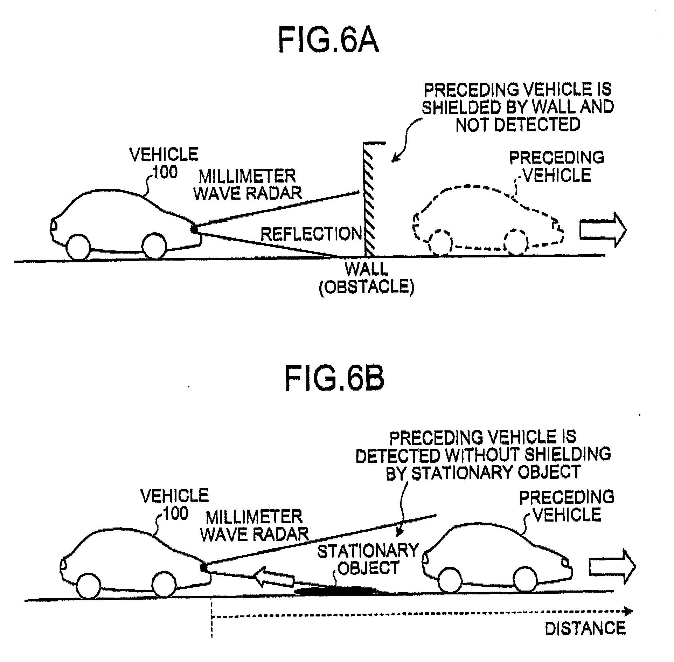

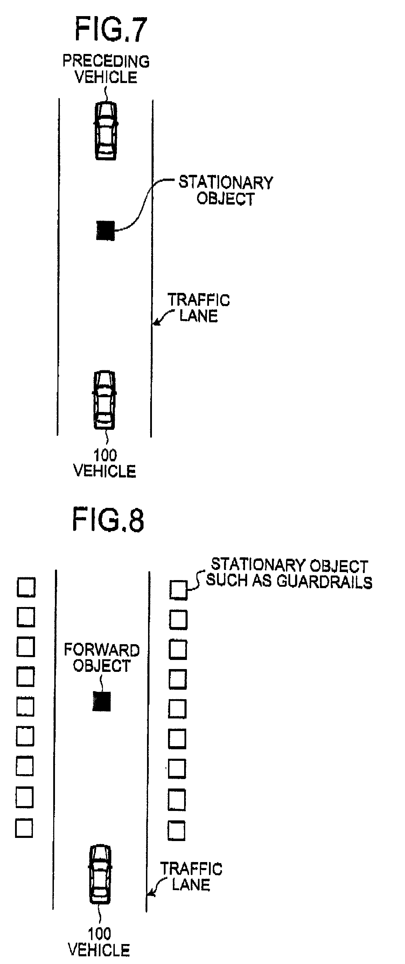

This is more specifically described in connection with Figs. 6A, 6B and 7. If a shield such as a wall is present between the vehicle 100 and a preceding vehicle, the forward object detecting unit 13a does not detect the preceding vehicle (see Fig. 6A). On the other hand, if there is no such a shield present between the vehicle 100 and a preceding vehicle, the forward object detecting unit 13a can detect the preceding vehicle (see Fig. 6B). In the case of Fig. 6B. The preceding vehicle is located further ahead of a forward object present ahead of the vehicle 100 (see Fig. 7).

That is, when the forward object detecting unit 13a has detected a forward object and a preceding vehicle ahead of the forward object, the second stationary on-road object recognizing unit 13c recognizes the forward object as a stationary on-road object.

When the vehicle 100 is travelling at a speed higher than a predetermined speed (e.g., equal to or higher than 80 km/h at which the vehicle 100 is presumably travelling on the expressway) and it is determined that a forward object detected by the forward object detecting unit 13a is located between two other forward objects that have been sequentially detected by the forward object detecting unit 13a, the third stationary on-road object recognizing unit 13d recognizes the forward object as a stationary on-road object. The other forward objects sequentially detected by the forward object detecting unit 13a can be, for example, guardrails extending along both sides of the expressway as shown in Fig. 8. A forward object located between the guardrails can be a stationary on-road object.

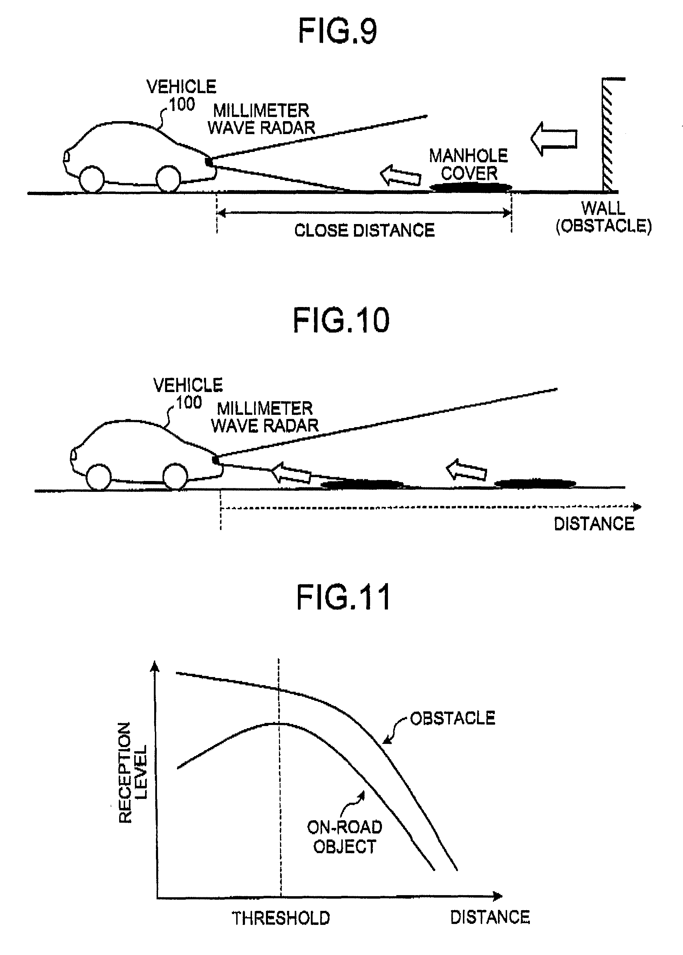

If it is not until the vehicle 100 is at close range, i.e., at a distance less than a predetermined value (e.g., 30 to 60 m), from a forward object that the forward object detecting unit 13a detects the forward object, the forth stationary on-road object recognizing unit 13e recognizes the forward object as a stationary on-road object. As can be seen from Fig. 9, the forward object detecting unit 13a can detect an obstacle such as a wall at a relatively distant location, for example, about 150 m ahead thereof. On the other hand, the forward object detecting unit 13a cannot detect a stationary on-road object such as a manhole cover until it comes in relatively close proximity, for example, about 30 to 60 m, to the object.

When it is determined that a reflected wave from a forward object in response to a millimeter wave from a millimeter wave radar has a characteristic that the output or strength thereof monotonically increases until the distance between the forward object and the vehicle 100 reaches a predetermined value (e.g., 10 m) and monotonically decreases when the distance falls below the predetermined value, the fifth stationary on-road object recognizing unit 13f recognizes the forward object as a stationary on-road object.

This characteristic is more specifically described in connection with Figs. 10 and 11. A stationary on-road object such as a manhole cover is of a flat plate type construction and lies essentially on the same plane as the road surface. Accordingly, at a relatively large distance ahead of the vehicle, such a stationary on-road object receives millimeter-wave radiation over its entire surface from the millimeter wave radar (see Fig. 10), and thus returns a strong reflected wave. Meanwhile, as a stationary on-road object becomes closer to the vehicle 100, the incident angle of a millimeter wave from the millimeter wave radar is closer to the vertical. Therefore, the stationary on-road object receives more millimeter-wave radiation, and thus returns a strong reflected wave. This can be seen from Fig. 11, which is a graph of characteristic curves of the reflected wave from a forward object that monotonically increases until the distance between the forward object and the vehicle reaches a predetermined value and monotonically decreases when the distance falls below the predetermined value.

However, when the distance between a forward object and the vehicle 100 reaches a predetermined threshold (e.g., 10 m), the forward object receives upon its partial surface millimeter-wave radiation, i.e., an area that receives millimeter-wave radiation decreases (see Fig. 10). As a result, a reflected wave from the forward object rapidly becomes weak (see Fig. 11).

When the first stationary on-road object recognizing unit 13b, the second stationary on-road object recognizing unit 13c, the third stationary on-road object recognizing unit 13d, the forth stationary on-road object recognizing unit 13e or the fifth stationary on-road object recognizing unit 13f recognizes a forward object as a stationary on-road object, the weight coefficient calculating unit 13g adds a weight coefficient corresponding to the one of the first to fifth stationary on-road object recognizing units 13b to 13f to an on-road object counter, which is a counter variable stored in a predetermined storage area (not shown) of the control unit 13.

For example, when the first stationary on-road object recognizing unit 13b recognizes a forward object as a stationary on-road object, the weight coefficient calculating unit 13g adds a weight coefficient "A" to the on-road object counter. Likewise, when the second stationary on-road object recognizing unit 13c, the third stationary on-road object recognizing unit 13d, the forth stationary on-road object recognizing unit 13e and the fifth stationary on-road object recognizing unit 13f recognize a forward object as a stationary on-road object, the weight coefficient calculating unit 13g adds weight coefficients "B", "C", "D" and "E" to the on-road object counter, respectively.

These weight coefficients "A", "B", "C", "D" and "E" are compatible values determined based on the accuracy of stationary on-road object recognition by the first to fifth stationary on-road object recognizing units 13b to 13f. Specifically, for example, the accuracy of stationary on-road object recognition by the third stationary on-road object recognizing unit 13d and the forth stationary on-road object recognizing unit 13e is generally low. Therefore, the values of "C" and "D" can be set lower than those of "A", "B" and "E".

The stationary on-road object determining unit 13h determines whether the value of the on-road object counter is equal to or greater than a predetermined threshold. Upon determining that the value of the on-road object counter is equal to or greater than the predetermined threshold, the stationary on-road object determining unit 13h determines a forward object detected by the forward object detecting unit 13a to be a stationary on-road object.

For example, it is assumed that the values of the weight coefficients "A", "B", "C", "D" and "E" are "80", "40", "40", "80" and "80", respectively, and the predetermined threshold is "160". When at least two of the first stationary on-road object recognizing unit 13b, the forth stationary on-road object recognizing unit 13e and the fifth stationary on-road object recognizing unit 13f recognize a forward object as a stationary on-road object, the value of the on-road object counter for the forward object is "160". Thus, the stationary on-road object determining unit 13h makes a final determination that the forward object is a stationary on-road object.

Even if only one of the first stationary on-road object recognizing unit 13b, the forth stationary on-road object recognizing unit 13e and the fifth stationary on-road object recognizing unit 13f recognizes a forward object as a stationary on-road object, when the second stationary on-road object recognizing unit 13c and the third stationary on-road object recognizing unit 13d recognize the forward object as a stationary on-road object, the value of the on-road object counter for the forward object is "160". Accordingly, the stationary on-road object determining unit 13h makes a final determination that the forward object is a stationary on-road object.

As described above, a forward object is recognized as a stationary on-road object based on a plurality of different criteria. Then, the forward object is finally determined as a stationary on-road object by combining recognition results together. With this, the accuracy of stationary on-road object recognition can be improved, and a stationary on-road object can be prevented from being erroneously recognized as an obstacle that requires vehicle control.

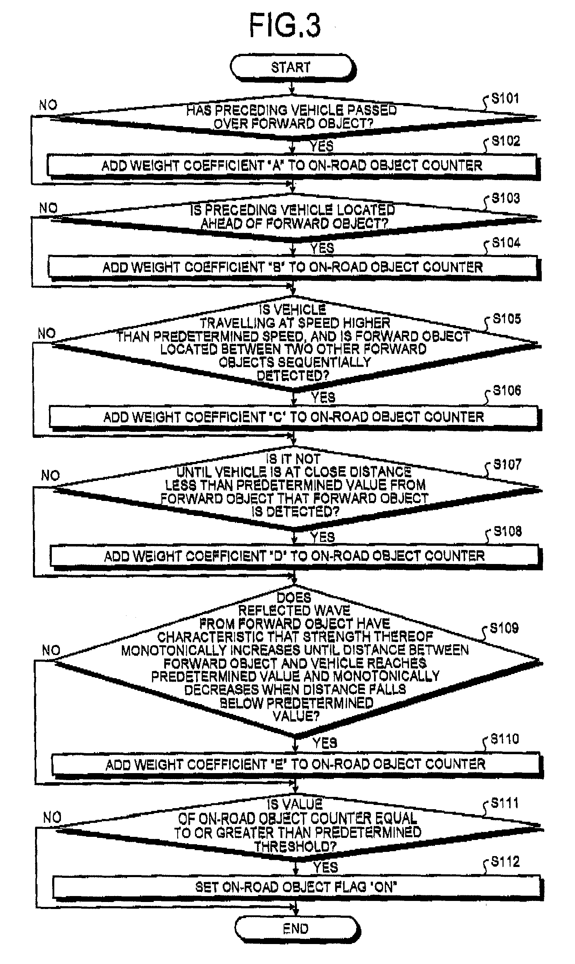

Described below is a stationary on-road object recognition process performed by the control unit 13 of the signal processing circuit 3 in the radar sensor 50. Fig. 3 is a flowchart of the stationary on-road object recognition process. The stationary on-road object recognition process is invoked synchronously with, for example, the continuity determination process for tracing the same forward object which is invoked every 100 milliseconds.

As shown in Fig. 13, the first stationary on-road object recognizing unit 13b determines whether a preceding vehicle detected by the forward object detecting unit 13a has passed over a forward object also detected by the forward object detecting unit 13a (step S101).

When the first stationary on-road object recognizing unit 13b determines that the preceding vehicle has passed over the forward object (Yes at step S101), the weight coefficient calculating unit 13g adds the weight coefficient "A" to the on-road object counter (step S102). On the other hand, when the first stationary on-road object recognizing unit 13b does not determine that the preceding vehicle has passed over the forward object (No at step S101), the process moves to step S103. Upon completion of the process at step S102, the process proceeds to step S103.

At step S103, the second stationary on-road object recognizing unit 13c determines whether the preceding vehicle detected by the forward object detecting unit 13a is located ahead of a forward object also detected by the forward object detecting unit 13a.

When the second stationary on-road object recognizing unit 13c determines that the preceding vehicle is located ahead of the forward object (Yes at step S103), the weight coefficient calculating unit 13g adds the weight coefficient "B" to the on-road object counter (step S104). On the other hand, when the second stationary on-road object recognizing unit 13c does not determine that the preceding vehicle is located ahead of the forward object (No at step S103), the process moves to step S105. Upon completion of the process at step S104, the process proceeds to step S105.

At step S105, the third stationary on-road object recognizing unit 13d determines whether the vehicle 100 is travelling at a speed higher than a predetermined speed and also the forward object detected by the forward object detecting unit 13a is located between two other forward objects sequentially detected by the forward object detecting unit 13a.

When the third stationary on-road object recognizing unit 13d determines that the vehicle 100 is travelling at a speed higher than the predetermined speed and also the forward object is located between two other forward objects sequentially detected by the forward object detecting unit 13a (Yes at step S105), the weight coefficient calculating unit 13g adds the weight coefficient "C" to the on-road object counter (step S106). On the other hand, when the third stationary on-road object recognizing unit 13d does not determine that the vehicle 100 is travelling at a speed higher than the predetermined speed and also the forward object is located between two other forward objects sequentially detected by the forward object detecting unit 13a (No at step S105), the process moves to step S107. Upon completion of the process at step S106, the process proceeds to step S107.

At step S107, the forth stationary on-road object recognizing unit 13e determines whether it is not until the vehicle 100 is at close range, i.e., at a distance less than a predetermined value, from the forward object that the forward object detecting unit 13a detects it.

When the forth stationary on-road object recognizing unit 13e determines that it is not until the vehicle 100 is at a distance less than the predetermined value from the forward object that the forward object detecting unit 13a detects it (Yes at step S107), the weight coefficient calculating unit 13g adds the weight coefficient "D" to the on-road object counter (step S108). On the other hand, when the forth stationary on-road object recognizing unit 13e does not determine that it is not until the vehicle 100 is at a distance less than the predetermined value from the forward object that the forward object detecting unit 13a detects it (No at step S107), the process moves to step S109. Upon completion of the process at step S108, the process proceeds to step S109.

At step S109, the fifth stationary on-road object recognizing unit 13f determines whether a reflected wave from the forward object detected by the forward object detecting unit 13a has a characteristic that the output or strength thereof monotonically increases until the distance between the forward object and the vehicle 100 reaches a predetermined value and monotonically decreases when the distance falls below the predetermined value.

When the fifth stationary on-road object recognizing unit 13f determines that the reflected wave has the characteristic that the output thereof monotonically increases until the distance between the forward object and the vehicle 100 reaches the predetermined value and monotonically decreases when the distance falls below the predetermined value (Yes at step S109), the weight coefficient calculating unit 13g adds the weight coefficient "E" to the on-road object counter (step S110). On the other hand, when the fifth stationary on-road object recognizing unit 13f does not determine that the reflected wave has the characteristic that the output thereof monotonically increases until the distance between the forward object and the vehicle 100 reaches the predetermined value and monotonically decreases when the distance falls below the predetermined value (No at step S109), the process moves to step S111. Upon completion of the process at step S110, the process proceeds to step S111.

At step S111, the stationary on-road object determining unit 13h determines whether the value of the on-road object counter, i.e., the sum of the weight coefficients, obtained by the weight coefficient calculating unit 13g is equal to or greater than a predetermined threshold.

Upon determining that the value of the on-road object counter is equal to or greater than the predetermined threshold (Yes at step S111), the stationary on-road object determining unit 13h sets an on-road object flag "ON" (step S112). Thereafter, the stationary on-road object recognition process ends. The on-road object flag is stored in a predetermined storage area (not shown) of the control unit 13. On the other hand, the value of the on-road object counter is less than the predetermined threshold (No at step S111), the stationary on-road object recognition process ends.

Based on the setting of the on-road object flag, the radar sensor 50 recognizes a forward object as a stationary on-road object. This can prevent a stationary on-road object from being erroneously recognized as an obstacle that requires vehicle control.

Of the processes described in the embodiment, all or part of the process described as being performed automatically can be performed manually, or all or part of the process described as being performed manually can be performed automatically with a known method. The process procedures, control procedures, specific names, information including various data and parameters mentioned in the above embodiment can be arbitrarily changed unless otherwise stated.

The constituent elements of the devices shown in the drawings are functionally conceptual, and need not necessarily be physically configured as illustrated. That is, the arrangement of the respective devices is not limited to that shown in the drawings, and can be functionally or physically separated or integrated, partly or wholly, according to the load or usage.

The same function of the respective devices can be entirely or partially realized by a central processing unit (CPU), a micro controller unit (MCU) or a computer program analyzed and executed by CPU or a micro controller such as a microprocessing unit (MPU) and MCU. The respective devices can also be implemented in wired-logic hardware.

As set forth hereinabove, according to an embodiment of the present invention, a forward object is recognized as a stationary on-road object based on the characteristic of the stationary on-road object. Thus, it is possible to accurately distinguish between a stationary on-road object and an obstacle, which prevents a stationary on-road object from being erroneously detected as an obstacle ahead of the vehicle.

Examples of the characteristic of the stationary on-road object include the following: a vehicle can pass over a stationary on-road object; a stationary on-road object does not shield a preceding vehicle ahead of it; a stationary on-road object is located between two other forward objects sequentially detected by a forward object detecting unit; and a stationary on-road object is not detected until a vehicle comes within close range thereof.

If the a stationary on-road object recognition is determined based on a plurality of different criteria, such as a combination of the above examples, a stationary on-road object and an obstacle can be more accurately distinguished. As a result, a stationary on-road object can be prevented from being erroneously detected as an obstacle ahead of the vehicle.

Moreover, the results obtained by the stationary on-road object recognition based on different criteria are weighted such that they contribute for the recognition process at different levels. Thus, a stationary on-road object and an obstacle can be accurately distinguished based on the respective results of the stationary on-road object recognition. Therefore, a stationary on-road object can be prevented from being erroneously detected as an obstacle ahead of the vehicle.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A forward object sensor (50) that emits a radar wave ahead of a vehicle (100) and detects an object ahead of the vehicle (100) based on a reflected wave received in response to the radar wave, the object including a forward object that is located ahead of the vehicle (100) and a preceding vehicle that is traveling ahead of the vehicle (100), the forward object sensor (50) comprising:
a forward object detecting unit (13a) that detects a forward object; and
a stationary on-road object recognizing unit (13b) that, upon determination that a preceding vehicle detected by the forward object detecting unit (13a) has passed over the forward object, recognizes the forward object as a stationary on-road object.

2. A forward object sensor (50) that emits a radar wave ahead of a vehicle (100) and detects an object ahead of the vehicle (100) based on a reflected wave received in response to the radar wave, the object including a forward object that is located ahead of the vehicle (100) and a preceding vehicle that is traveling ahead of the vehicle (100), the forward object sensor (50) comprising:
a forward object detecting unit (13a) that detects a forward object; and
a stationary on-road object recognizing unit (13c) that, upon determination that a preceding vehicle detected by the forward object detecting unit (13a) is located ahead of the forward object, recognizes the forward object as a stationary on-road object.

3. A forward object sensor (50) that emits a radar wave ahead of a vehicle (100) and detects an object ahead of the vehicle (100) based on a reflected wave received in response to the radar wave, the object including a forward object that is located ahead of the vehicle (100) and a preceding vehicle that is traveling ahead of the vehicle (100), the forward object sensor (50) comprising:
a forward object detecting unit (13a) that detects a forward object; and
a stationary on-road object recognizing unit (13d) that, upon determination that the vehicle (100) is travelling at a speed higher than a predetermined speed and the forward object is located between two other forward objects sequentially detected by the forward object detecting unit (13a), recognizes the forward object as a stationary on-road object.

4. A forward object sensor (50) that emits a radar wave ahead of a vehicle (100) and detects an object ahead of the vehicle (100) based on a reflected wave received in response to the radar wave, the object including a forward object that is located ahead of the vehicle (100) and a preceding vehicle that is traveling ahead of the vehicle (100), the forward object sensor (50) comprising:
a forward object detecting unit (13a) that detects a forward object; and
a stationary on-road object recognizing unit (13e) that, upon determination that it is not until the vehicle (100) is at a close distance less than a predetermined value from the forward object that the forward object detecting unit (13a) detects the forward object, recognizes the forward object as a stationary on-road object.

5. A forward object sensor (50) that emits a radar wave ahead of a vehicle (100) and detects an object ahead of the vehicle (100) based on a reflected wave received in response to the radar wave, the object including a forward object that is located ahead of the vehicle (100) and a preceding vehicle that is traveling ahead of the vehicle (100), the forward object sensor (50) comprising:
a forward object detecting unit (13a) that detects a forward object;
a first stationary on-road object recognizing unit (13b) that, upon determination that a preceding vehicle detected by the forward object detecting unit (13a) has passed over the forward object, recognizes the forward object as a stationary on-road object;
a second stationary on-road object recognizing unit (13c) that, upon determination that the preceding vehicle is located ahead of the forward object, recognizes the forward object as a stationary on-road object;
a third stationary on-road object recognizing unit (13d) that, upon determination that the vehicle (100) is travelling at a speed higher than a predetermined speed and the forward object is located between two other forward objects sequentially detected by the forward object detecting unit (13a), recognizes the forward object as a stationary on-road object;
a fourth stationary on-road object recognizing unit (13e) that, upon determination that it is not until the vehicle (100) is at a close distance less than a predetermined value from the forward object that the forward object detecting unit (13a) detects the forward object, recognizes the forward object as a stationary on-road object; and
a fifth stationary on-road object recognizing unit (13f) that, upon determination that a reflected wave from the forward object has a characteristic that strength of the reflected wave monotonically increases until a distance between the forward object and the vehicle (100) reaches a predetermined value and monotonically decreases when the distance falls below the predetermined value, recognizes the forward object as a stationary on-road object.

6. The forward object sensor (50) according to claim 5 further comprising:
a weight coefficient calculating unit (13g) that calculates a sum of weight coefficients based on recognition results obtained by the first stationary on-road object recognizing unit (13b), the second stationary on-road object recognizing unit (13c), the third stationary on-road object recognizing unit (13d), the fourth stationary on-road object recognizing unit (13e), and the fifth stationary on-road object recognizing unit (13f); and
a stationary on-road object determining unit (13h) that determines, when the sum of weight coefficients is equal to or greater than a predetermined value, the forward object to be a stationary on-road object.
